# EUROPÄISCHE PATENTANMELDUNG

(11) **EP 1 382 882 A2**
(43) Veröffentlichungstag der Anmeldung: **21.01.2004**
(21) Anmeldenummer: 03016149.1
(22) Anmeldetag: 16.07.2003
(51) Int. Cl.: F16G 13/18

(54) **Stellvorrichtung mit einer drucksteifen Antriebskette**

(30) Priorität: 18.07.2002 DE 20210844 U
(71) Anmelder: Schmezer, Alexander, 49124 Georgsmarienhütte (DE)
(72) Erfinder: Schmezer, Karl-Heinz, 49124 Georgsmarienhütte (DE)
(74) Vertreter: Busse, Dietrich

(57) **Zusammenfassung**

Eine Stellvorrichtung (1) ist mit einer drucksteifen Antriebskette versehen, (3) deren Laschenteile aufweisende und durch Gelenkteile verbundene Kettenglieder (4) mittels eines angetriebenen Kettenrades (5) in eine drucksteife Stellung verlagerbar und aus dieser rückholbar sind. Die eine regelmäßige Reihe bildenden Kettenglieder (4,4',4'') weisen erfindungsgemäß jeweils zwei Schwenkelemente (6,7) auf, die in Kettenlängsrichtung sowohl zwischenliegend als auch zum nebengeordneten Kettenglied hin jeweilige Gelenke in Form von komplementär aneinanderlegbaren Gleitflächen mit Bogenkontur (8) bilden. Dabei ist an zumindest einem der beiden Schwenkelemente (6,7) je Kettenglied ein Antriebsglied vorgesehen, mit dem die Schwenkelemente (6,7) mittels eines Verzahnungsprofils am Kettenrad (5) in eine drucksteife Stellung verlagerbar und aus dieser rückholbar sind.

## Beschreibung

Die Erfindung betrifft eine Stellvorrichtung mit einer drucksteifen Antriebskette gemäß dem Oberbegriff des Anspruchs 1.

Eine gemäß DE 33 15 779 C2 bekannte Stellvorrichtung weist einen Antrieb mit einer drucksteifen Laschenkette auf, deren mit Außenlaschen versehene Kettenglieder durch jeweilige Gelenkbolzen und Riegelbolzen quer zur Kettenlängsrichtung verbunden sind. Mit einem zum Antrieb der Kette vorgesehenen Kettenrad wird jeweils an diesen Gelenkbolzen eine Vorschubkraft eingeleitet und danach können die zur Aussteifung der Kette vorgesehenen Riegelbolzen mittels einer quer zur Vorschubrichtung wirkenden Führungsvorrichtung in die jeweilige Riegelstellung verlagert werden. Auch bei der bei der gemäß DE 1 046 422 vorgesehenen Lösung werden quer zur Vorschubrichtung der Kette verlagerbare Riegelbolzen mittels einer Führungsvorrichtung bewegt, so daß die Kette eine drucksteife Gebrauchsstellung erst dann einnimmt, wenn diese Verlagerung der Riegelbolzen erfolgt ist. Bei einer Blockkette gemäß DE 18 55 588 U wird eine Förderanlage zum horizontalen Fördern von Gütern vorgeschlagen, wobei die Zugkraft eines Antriebsrades nur über jeweilige die Glieder der Kette verbindende Gelenkbolzen übertragen werden kann. Gemäß DE 199 83 305 T1 ist ein Verbindungsteil vorgeschlagen, das eine innenliegende Kette aufweist, die zur Aussteifung mit einer ein kanalförmig langgestrecktes Längenstück bildenden Umhüllung versehen ist. Damit erfordern diese drucksteifen Antriebsketten einen nachteilig großen Einbauraum und sind durch eine Vielzahl von stark belasteten Gelenkteilen hohem Verschleiß ausgesetzt.

Die Erfindung befaßt sich mit dem Problem, eine Stellvorrichtung mit einer drucksteifen Antriebskette zu schaffen, die mit geringem technischen Aufwand aus einer wenige Einzelbauteile erfordernden Struktur von Kettengliedern montierbar ist, mit geringem Raumbedarf für unterschiedliche Druckkräfte erfordernde Einsatzbedingungen einsetzbar ist und eine langzeitstabile Anwendung für Baugruppen mit unterschiedlichen Arbeitsfunktionen ermöglicht.

Die Erfindung löst dieses Problem mit einer Antriebskette mit den Merkmalen des Anspruchs 1. Hinsichtlich wesentlicher weiterer Ausgestaltungen der Antriebskette und diese aufweisender Stellvorrichtungen wird auf die Ansprüche 2 bis 20 verwiesen.

Die erfindungsgemäße Antriebskette weist unmittelbar im Bereich von Gleitflächen aneinanderliegende Schwenkelemente als die wesentlichen funktionalen Bauteile zur Kraftübertragung auf, so daß aus wenigen Einzelteilen eine Baueinheit nach Art einer Schubkette für eine weitgehend beliebige Verwendung an Stell-, Hub- und Positioniergeräten erreicht ist. Mit den einfach herstellbaren Funktionsteilen und einem diesen in Verbindungseingriff mit einem Kettenrad o. dgl. Antriebsorgan zugeordnetes Antriebsglied ist ein variabel einsetzbares und einfach aufgebautes System mit drucksteifer Kette geschaffen. Die drucksteife Kette ist vorteilhaft als gelenkiger Antriebsmast einsetzbar, der bei großem Leistungsspektrum im Hinblick auf die aufnehmbaren Stellbelastungen und die möglichen Verlagerungswege nur vergleichsweise geringen Einbauraum erfordert.

Weitere Einzelheiten und vorteilhafte Ausgestaltungen der Erfindung ergeben sich aus der nachfolgenden Beschreibung und der Zeichnung, in der mehrere Ausführungsbeispiele mit der erfindungsgemäßen Antriebskette und einer Stellvorrichtung veranschaulicht sind. In der Zeichnung zeigen:
- Fig. 1: eine Seitenansicht einer als Hubtisch ausgebildeten Stellvorrichtung mit als Antrieb vorgesehener drucksteifer Antriebskette,
- Fig. 2: eine Seitenansicht ähnlich Fig. 1 mit dem Hubtisch in einer oberen Hubendstellung,
- Fig. 3: eine Draufsicht auf die Antriebsbaugruppe des Hubtisches gemäß Fig. 2 ohne dessen obere Tischplatte,
- Fig. 4: eine vergrößerte Seitenansicht eines Teilbereiches der drucksteifen Antriebskette in einer Arbeitsstellung ähnlich Fig. 2,
- Fig. 5: eine Vorderansicht der Antriebskette gemäß Fig. 4,
- Fig. 6: eine Einzeldarstellung eines die Antriebskette in der Stellvorrichtung gemäß Fig. 1 aufnehmenden Führungsteiles,
- Fig. 7: eine Seitenansicht ähnlich Fig. 6 mit der im Führungsteil in einer Umlenknut aufgenommenen Antriebskette,
- Fig. 8: eine Seitenansicht des in die Antriebskette eingreifenden Kettenrades,
- Fig. 9: eine Draufsicht des Kettenrades gemäß Fig. 8,
- Fig. 10: eine Perspektivdarstellung eines ersten Schwenkelementes für das die Antriebskette bildende Kettenglied,
- Fig. 11: eine Perspektivdarstellung eines zweiten Schwenkelementes des Kettengliedes,
- Fig. 12: eine Perspektivdarstellung eines zur Verbindung der Schwenkelemente bzw. der Kettenglieder vorgesehenen Laschenteiles,
- Fig. 13: eine Perspektivdarstellung einer zweiten Ausführungsform der Antriebskette mit in zwei parallelen Reihen angeordneten Schwenkelementen mit Bolzenverbindungen,
- Fig. 14: eine Seitenansicht der Antriebskette gemäß Fig. 13,
- Fig. 15: eine Draufsicht der Kette gemäß Fig. 14,
- Fig. 16 bis 19: jeweilige Einzeldarstellungen der für die mehrteilige Antriebskette gemäß Fig. 13 bis 15 vorgesehenen Einzelteile in Form der Schwenkelemente und jeweiliger Laschenteile ähnlich Fig. 10 bis 12,
- Fig. 20: eine Draufsicht auf ein Kettenrad für die mehrteilige Antriebskette gemäß Fig. 13,
- Fig. 21: eine Explosivdarstellung einer eingliedrigen Antriebskette ähnlich Fig. 5 mit veränderter Krafteinleitung und angepaßtem Laschenteil,
- Fig. 22: eine Darstellung ähnlich Fig. 21 mit einer mehrgliedrigen Ausführung der einfacher aufgebauten Kette,
- Fig. 23: eine Seitenansicht ähnlich Fig. 7 mit der Antriebskette gemäß Fig. 22 in Verbindungsstellung, und
- Fig. 24: eine Vorderansicht der in das Führungsteil eingreifenden Führungsrolleder Antriebskette gemäß Fig. 23.

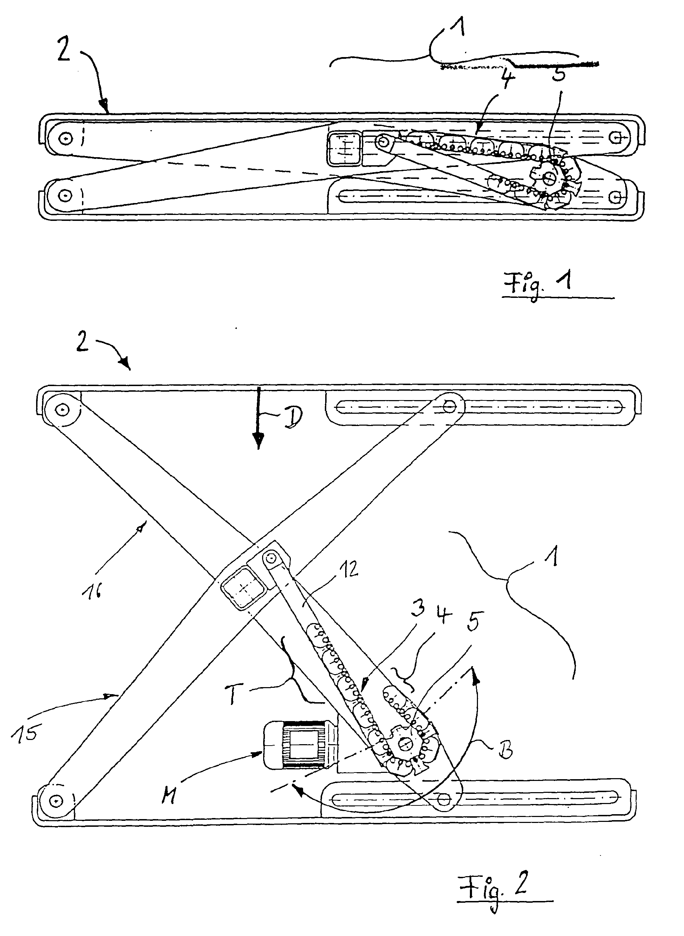

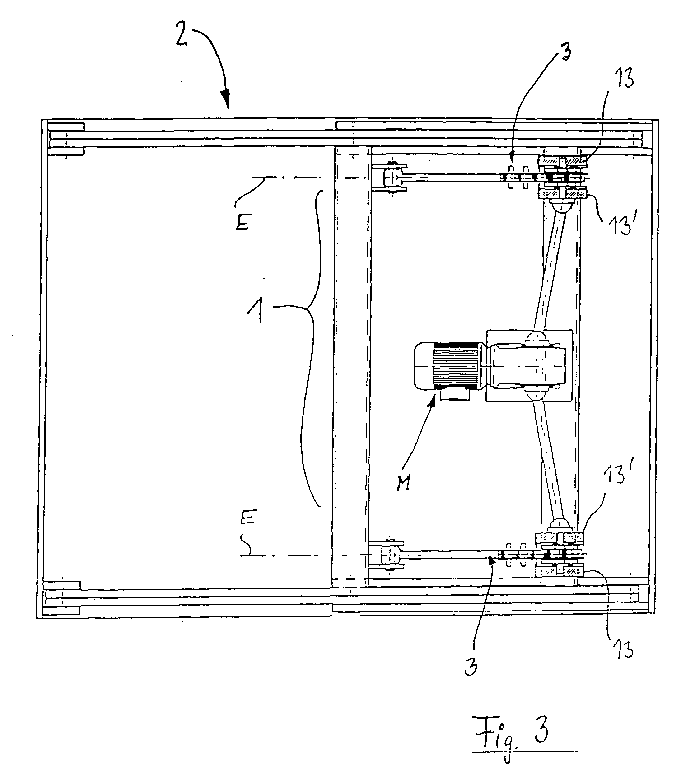

In Fig. 1 ist eine insgesamt mit 1 bezeichnete Stellvorrichtung dargestellt, wobei in Zusammenschau mit Fig. 2 deutlich wird, daß die Stellvorrichtung 1 als Baugruppe eines Hubtisches 2 vorgesehen ist, der stufenlos in die dargestellten Hubstellungen verlagerbar ist. Die Stellvorrichtung 1 ist dabei mit einer Antriebskette 3 versehen, die durch Gelenkverbindungen verschwenkbare Kettenglieder 4 aufweist, die mittels eines durch einen Motor M angetriebenen Kettenrades 5 in eine drucksteife Stellung (Fig. 2) und aus dieser rückholbar (Fig. 1) sind.

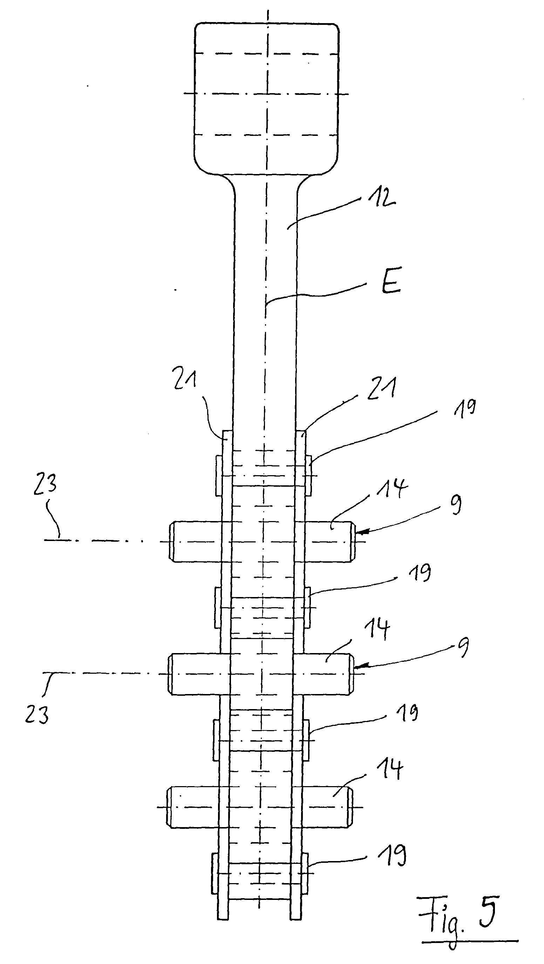

In Fig. 4 ist die erfindungsgemäße Ausführung der drucksteifen Antriebskette 3 durch eine vergrößerte Ausschnittsdarstellung verdeutlicht. Die Antriebskette 3 weist Kettenglieder 4, 4', 4" auf, die aus jeweils zwei eine regelmäßige Reihe bildenden Schwenkelementen 6 und 7 gebildet sind. Daraus ergibt sich, daß das jeweilige erste Schwenkelement 6 in Kettenlängsrichtung einerseits an das zugeordnete zweite Schwenkelement 7 angrenzt und andererseits das nebengeordnete Kettenglied 4' mit seinem zweiten Schwenkelement 7' so angelenkt ist, daß eine gleichmäßige Reihenanordnung der abwechselnd aneinanderliegenden Schwenkelemente 6, 7, 6', 7' gebildet ist.

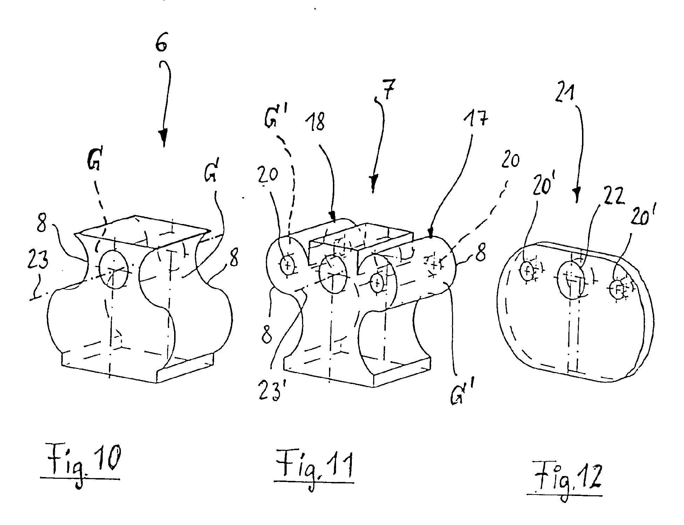

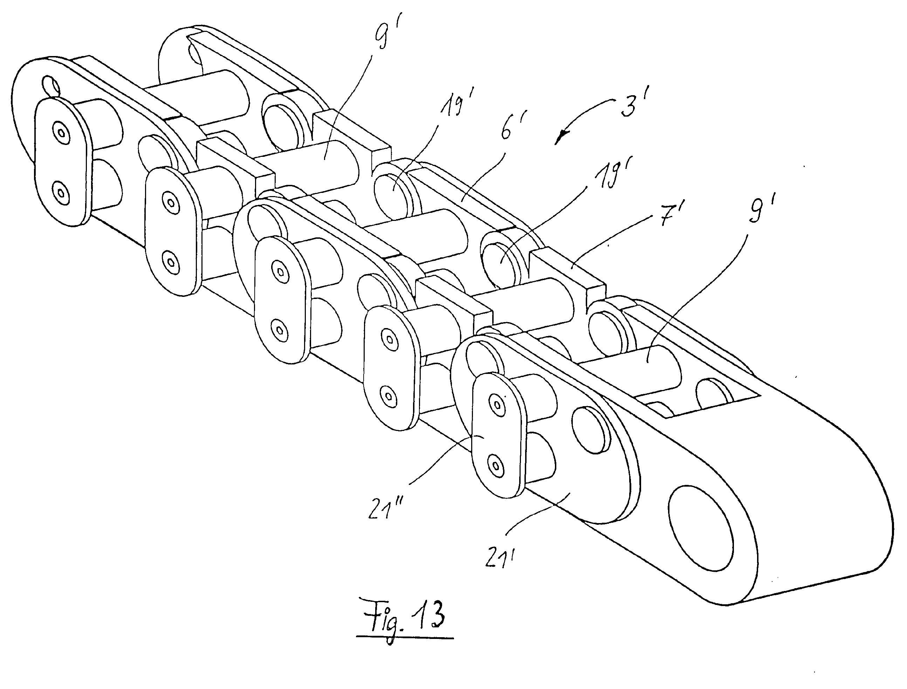

Die Einzelbetrachtung der Schwenkelemente 6 und 7 anhand des Kettenglieds 4 macht deutlich, daß die Bauteile unmittelbar aneinandergrenzen. In diesem Berührungsbereich sind sowohl zwischen den Schwenkelementen 6 und 7 als auch zum nebengeordneten Kettenglied 4' hin komplementär aneinanderlegbare Gleitflächen G mit einer Bogenkontur 8 (Fig. 10 und 11) vorgesehen, mit denen direkt eine gelenkige Verbindung der Schwenkelemente 6 und 7 nach Art eines Gleitscharniers gebildet ist.

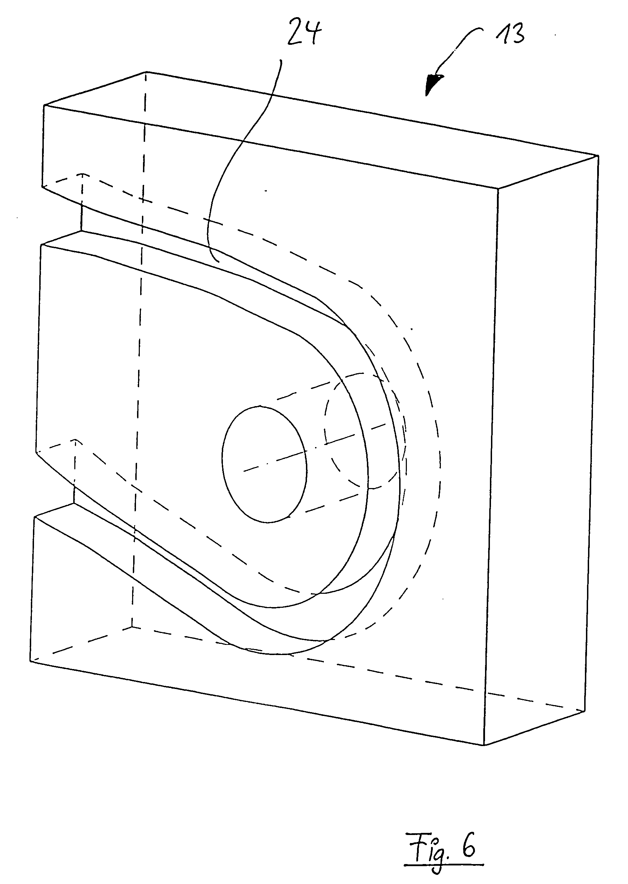

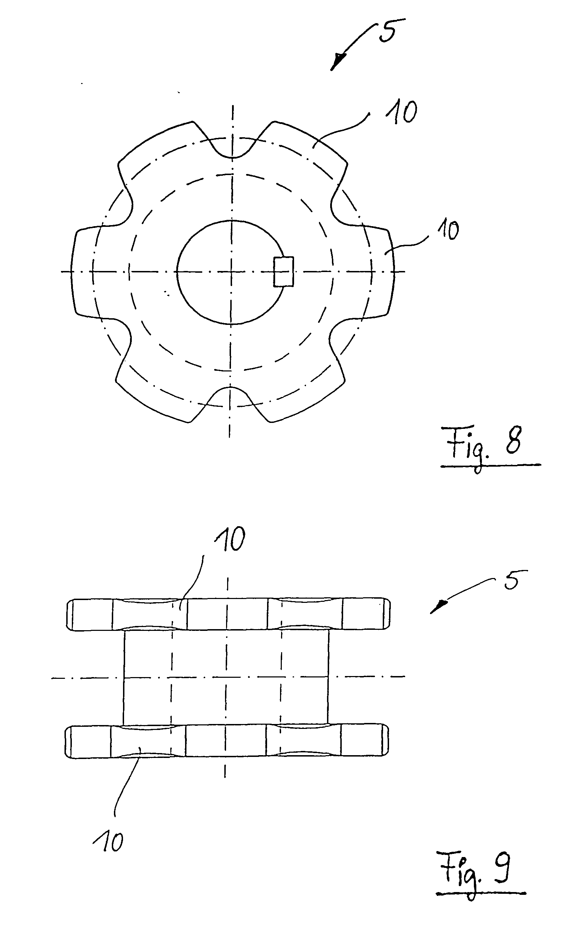

Zur Einleitung einer Antriebskraft F ist an zumindest einem der beiden Schwenkelemente 6, 7 je Kettenglied 4, 4' ein allgemein mit 9 bezeichnetes Antriebsglied (Fig. 5) vorgesehen. Mit diesem Antriebsglied 9 sind die Schwenkelemente 6, 7 von einem Verzahnungsprofil 10 eines in Fig. 8 und 9 dargestellten Kettenrades 5 erfaßbar und in eine drucksteife Stellung (Fig. 4, linke Seite) verlagerbar und aus dieser Arbeitsstellung (Fig. 2) durch einen gegenläufigen Antrieb in die Ausgangsstellung (Fig. 1) rückholbar.

Die in Fig. 4 dargestellte Antriebsphase zeigt prinzipiell, daß mittels der einstückigen Schwenkelemente 6 und 7 ein als Stellkraft wirksames Drehmoment A (Fig. 7) über das jeweilige in Eingriff befindliche Antriebsglied 9 einleitbar ist, diese an den Schwenkelementen 6 und 7 wirksame Stellkraft nur im Bereich der aneinanderliegenden Gleitflächen G aufgenommen (dargestellt durch mehrere Pfeile F) und in die dem angetriebenen Schwenkelement vorgelagerten Kettenglieder eingeleitet wird, so daß die Antriebskraft F' an einem Zwischenstück 12 abnehmbar ist.

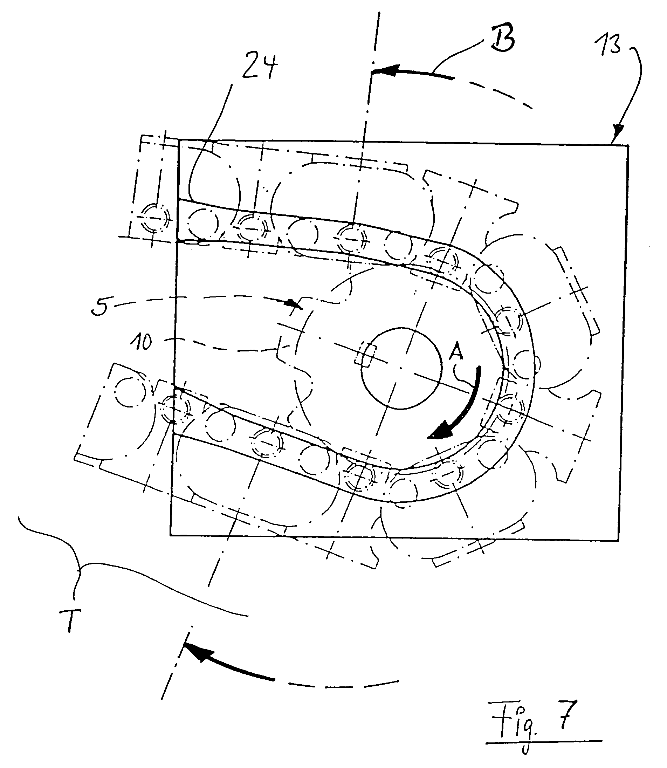

Es versteht sich, daß mit den Schwenkelementen 6, 7 bei Erreichen der drucksteifen Arbeitsstellung der Kette 3 (Fig. 2) die jeweils wirksamen Gegendruckkräfte gemäß Pfeil D auch nur im Bereich der aneinanderliegenden Gleitflächen G aufnehmbar sind. Dieses Konzept der Schwenkelemente-Kette ermöglicht den Aufbau unterschiedlichster Stellvorrichtungen 1, wobei die Antriebsbaugruppe mit der Kette 3 vorteilhaft so konzipiert ist, daß die Schwenkelemente 6, 7 bei ihrer Verlagerung in die drucksteife Arbeitsstellung durch ein in Fig. 6 dargestelltes Führungsteil 13 eine zusätzliche Abstützung und Führung entsprechend dem vorgesehenen Stellweg erfahren. Ebenso ist denkbar, daß die aneinandergereihten Schwenkelemente 6 und 7 nur in einem Führungskanal (nicht dargestellt) gehalten sind und über die Antriebsglieder 9 die Vorschubbewegung so eingeleitet wird, daß die Schwenkelemente entsprechend der vom Führungskanal vorgegebenen Schubrichtung verlagert werden.

In der dargestellten Ausführungsform sind die im Bereich der komplementären Bogenkontur 8 relativ zueinander verschwenkbaren Schwenkelemente 6 und 7 als einstückige Bauteile so gefertigt und montiert, daß eine senkrecht von den als Druckbolzen 14 ausgebildeten Antriebsgliedern 9 durchgriffene Arbeitsebene E (Fig. 5) entsprechend der Mittellängsebene der Kette 3 definiert ist. Diese konstruktive Aufbau der Schwenkelemente 6 und 7 ermöglicht eine anwenderspezifisch anpaßbare Verlagerung der Schwenkelemente 6 und 7 in der Arbeitsebene, wobei drucksteife Arbeitsstellungen auch ausgehend von einer gestreckten 0°-Ausgangsstellung durch lineare Verlagerung erreichbar sind (nicht dargestellt).

Bei Anwendung des dargestellten Kettenrades 11 als Antrieb ist eine Verlagerung und Umlenkung der Schwenkelemente 6 und 7 bis in mehr als 180° geänderte Abtriebsstellungen (Fig. 2) ausführbar. Die Schwenkelemente 6, 7 werden von dem als Antrieb vorgesehenen Kettenrad 11 so erfaßt, daß die im gestreckten Kettentrum (Fig. 4, linke Seite) der Kette 3 befindlichen Schwenkelemente des Gliedes 4" in einer im wesentlichen tangential zum Umfang des Kettenrades 11 verlaufenden Geradeausrichtung verlagert sind (Fig. 2).

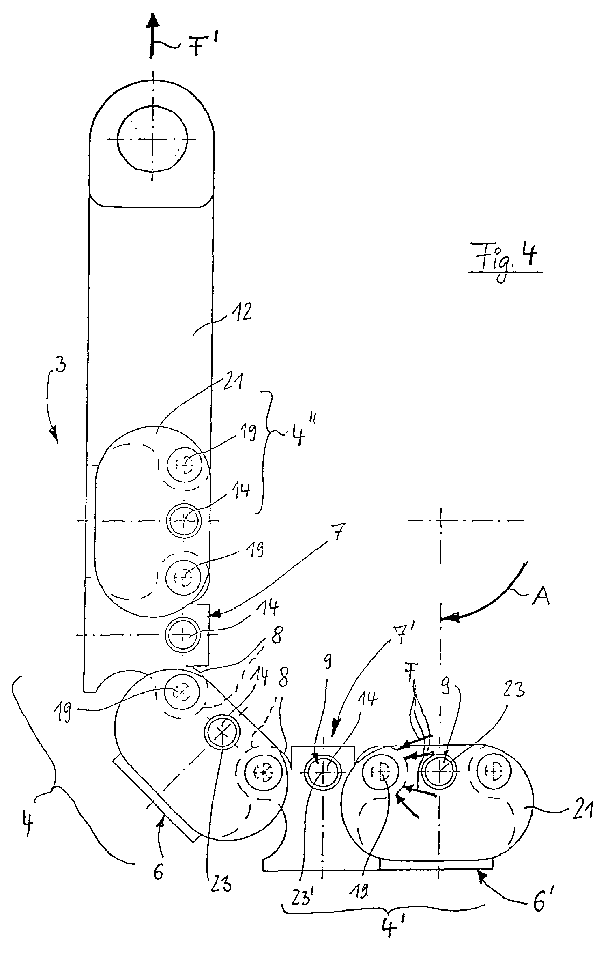

Entsprechend der wirksamen Führung (in Fig. 2) durch die Scherenarme 15 und 16 des Hubtisches 2 sowie des Führungsteiles 13, 13' (Fig. 3), sind die Schwenkelemente 6, 7 mit einer dem Umfang des Kettenrades 11 folgenden Bogenkrümmung B (Fig. 7) verlagerbar, wobei das abtriebseitige Kettentrum T die Geradeausrichtung beibehält. Diese Verlagerung des abtriebseitigen Kettentrums T ist im Bereich der Stellvorrichtung 1 nach Art einer Zwangsführung sichergestellt.

Die Einzeldarstellungen der Schwenkelemente 6 und 7 gemäß Fig. 10 und 11 verdeutlichen einen vorzugsweisen Aufbau der Einzelteile. Das zweite Schwenkelement 7 weist dabei jeweilige spiegelbildliche angeordnete Verbindungsansätze 17 und 18 auf, in deren Bereich jeweils ein die Schwenkelemente 6 und 7 untereinander bzw. mit dem nachfolgenden Kettenglied verbindender Haltestift 19 (Fig. 5) eine Durchgangsbohrung 20 durchgreift.

An dem zweiten Schwenkelement 7 (Fig. 11) sind jeweilige in Fig. 12 in Einzeldarstellung veranschaulichte Laschenteile 21 vorgesehen (beidseits der Arbeitsebene E, Fig. 5), mit dem im Bereich des Haltestiftes 19 lediglich die Verbindung zum Schwenkelement 7 hergestellt wird und andererseits bildet der zweite Haltestift 19 eine Verbindung zum nebengeordneten Kettenglied. Mit dieser Verbindung der Haltestifte 19 ist eine gelenkige Verbindung geschaffen, die unabhängig und weitgehend belastungsfrei von der scharnierartigen und die Stellkräfte aufnehmenden Stütz-Schwenk-Verbindung im Bereich der jeweiligen Gleitflächen G der Bogenkontur 8 ist.

Die Zusammenschau der Figuren 10 bis 12 mit Fig. 4 und 5 verdeutlicht, daß das Laschenteil 21 jeweils eine den Druckbolzen 14 umfassende Aufnahmebohrung 22 aufweist und in Längsrichtung beidseits dieser Bohrung 22 jeweils eine die nebengeordneten Schwenkelemente bzw. Kettenglieder mittels der Haltestifte 19 zu der Kette 3 verbindende Stecköffnung 20' vorgesehen ist.

Dieser aus Gleichteilen aufgebaute Bausatz der Antriebskette 3 weist außenseitig gegenüberliegend die jeweiligen Laschenteile 21 (Fig. 5) auf und diese erfassen in dieser Ausführung das jeweilige erste Schwenkelement 6 jeweils mittig im Bereich einer Querachse 23, in der der antreibende Druckbolzen 14 verläuft.

Das erste Schwenkelement 6 (Fig. 10) ist mit konkav geformten Gleitflächen G versehen, in denen das jeweilige konvex geformte Gleitflächen G' aufweisende zweite Schwenkelement 7 geführt ist. Diese konvexen Gleitflächen G des zweiten Schwenkelementes 7 sind als Teilbereich einer S-förmigen Bogenkontur 8 vorgesehen und im oberen Teilbereich dieser S-Kontur durchgreift der jeweilige das Laschenteil 21 tragende Haltestift 19 das zweite Schwenkelement 7 (Fig. 4).

In zweckmäßiger Ausführung ist auch das erste Schwenkelement 6 im Bereich seiner konkaven Bogenkontur 8 mit zum zweiten Schwenkelement 7 komplementärer S-Form ausgeführt. Ebenso ist denkbar, daß die Teile 6 und 7 nur die obere Bogenkontur 8 aufweisen und sich daran nach unten eine ebene Anlagefläche anschließen kann (nicht dargestellt).

In Fig. 6 und 7 ist das Führungsteil für die Antriebskette 3 näher dargestellt, wobei das Führungsteil 13 eine die Druckbolzen 14 aufnehmende Führungsnut 24 aufweist. Die dargestellte Antriebskette 3 ist in ihrer jeweiligen Bewegungsphase in jedem Falle querkraftstabil, so daß die Stellvorrichtung 1 die entsprechenden Sicherheitsanforderungen erfüllt.

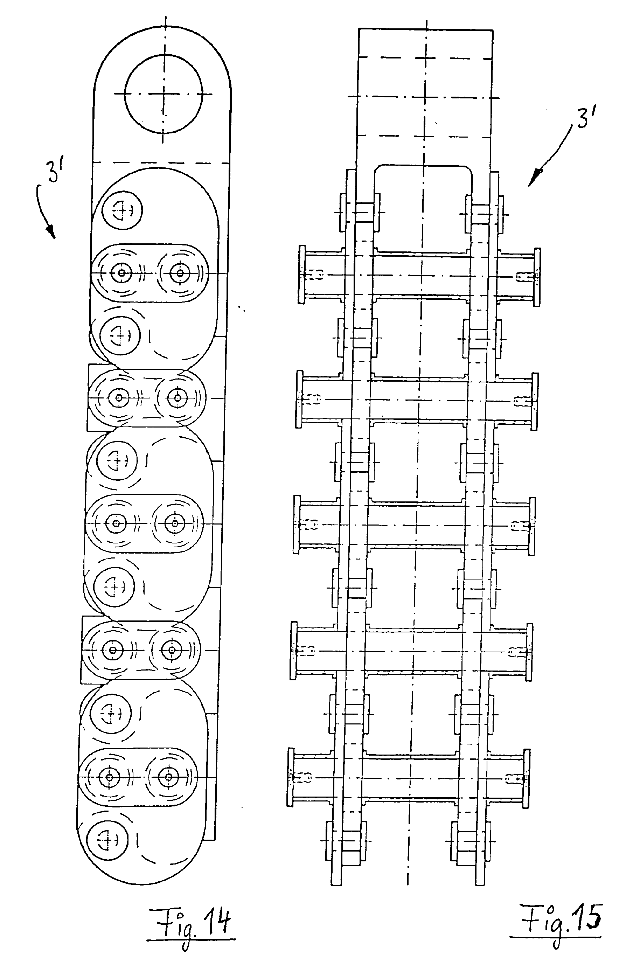

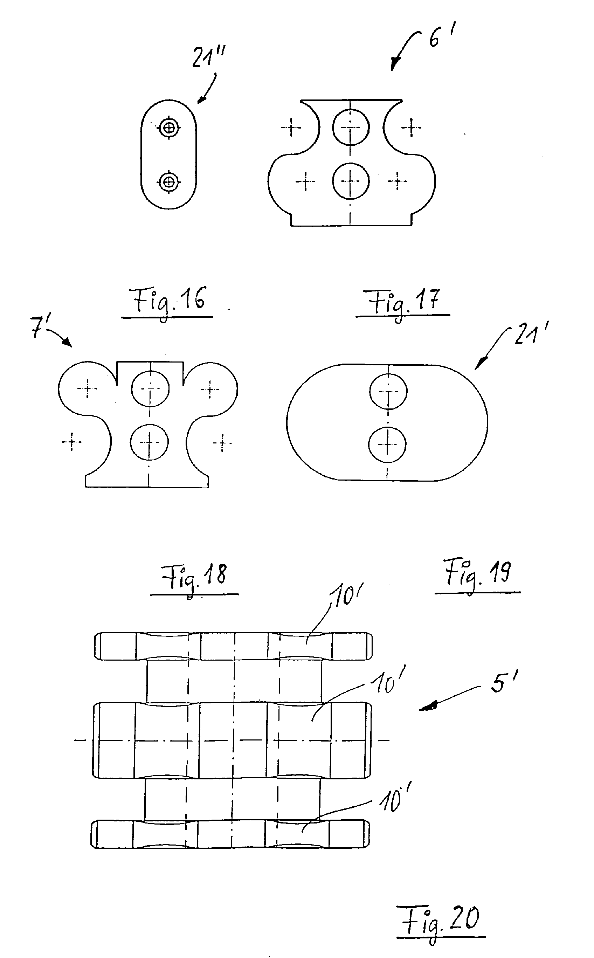

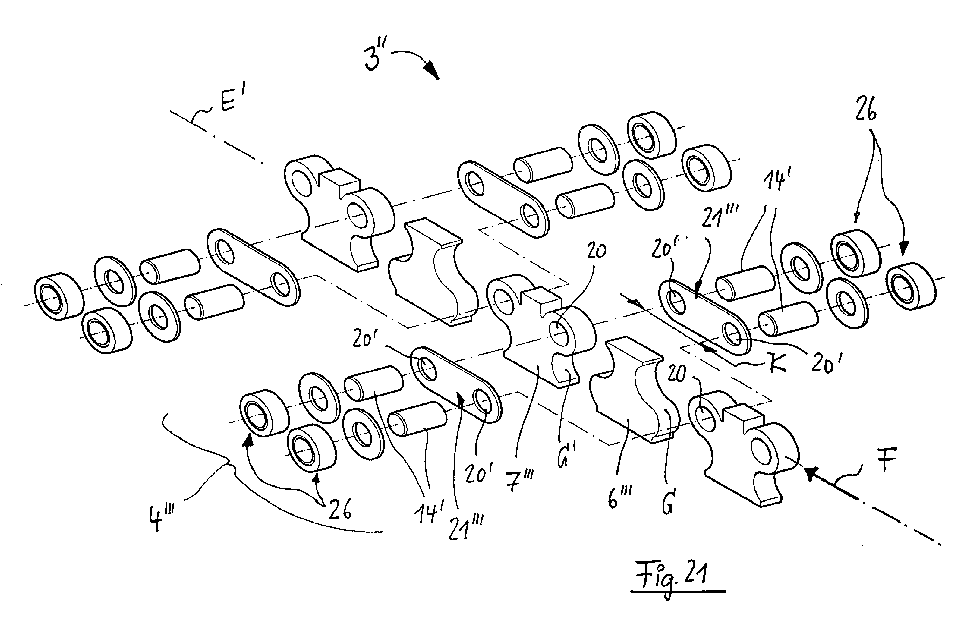

In Fig. 13 bis 20 ist eine Antriebskette 3' in montierter Stellung (Fig. 13 bis 15) mit ihren den vorbeschriebenen Einzelteilen entsprechenden Schwenkelementen 6' und 7' bzw. Laschenteilen 21', 21" und dem zugeordneten Kettenrad 11' mit Verzahnungen 10' dargestellt. Diese Antriebskette 3' besteht aus mehreren im Abstand und in Kettenlängsrichtung parallel zueinander ausgerichteten Reihen von Schwenkelementen 6" und 7", wobei diese beiden parallelen Reihen durch ein verlängertes Antriebsglied 9' in Form des Druckbolzens 14 quer verbunden sind. Mit dieser Erweiterung der Antriebskette 3, die auch weitere parallele Reihen aufweisen kann (nicht dargestellt) ist eine Struktur geschaffen, mit der größere Antriebskräfte übertragen werden können, wobei das an der eingliedrigen Antriebskette 3 beschriebene Konzept (Fig. 4) prinzipiell erhalten bleibt.

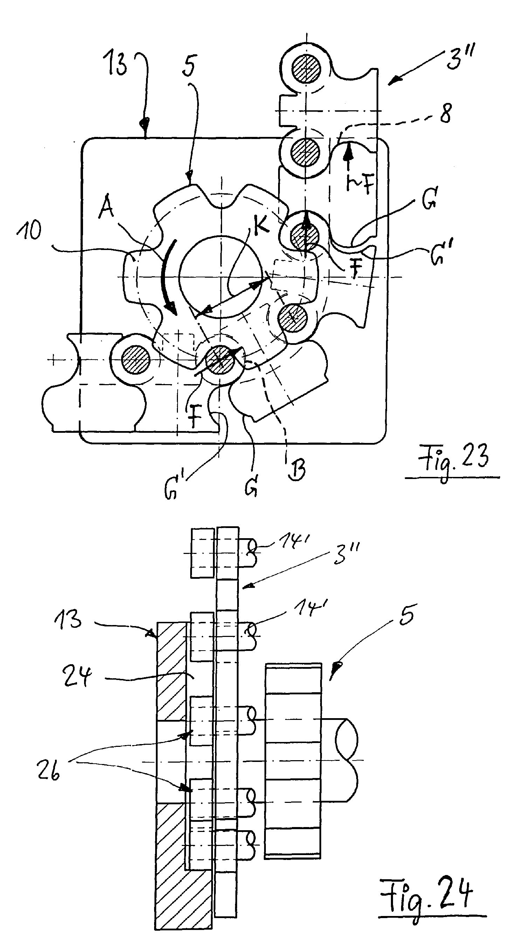

In Fig. 21 ist eine weitere, vereinfachte Ausführungsform der Antriebskette 3" dargestellt, wobei diese als eingliedrige Kette ähnlich Fig. 5 mit eine regelmäßige Reihe bildenden Einzelteilen versehen ist, denen jeweils außenseitige Paare von Laschenteilen 21"' zugeordnet sind. Die Laschenteile 21"' sind dabei als Verbinder zwischen den jeweiligen zweiten Schwenkelementen 7"' so angeordnet, daß das zwischehgeordnete erste Schwenkelement 6"' außenseitig übergriffen ist. Damit ist erreicht, daß die Schwenkelemente 6"' in Kettenlängsrichtung als lose Teile zu der jeweiligen Bogenkontur 8 bzw. den Gleitflächen G, G' der jeweils nebengeordneten zweiten Schwenkelemente 7"' hin geführt sind und bei Einleitung der Vorschubkraft F die Gleitflächen G, G' aneinanderliegen (Fig. 23).

Diese Antriebskette 3" gemäß Fig. 21 wird dabei über zumindest zwei die Laschenteile 21"' paarweise durchgreifender Druckbolzen 14' dadurch angetrieben, daß die Stellkraft F (ähnlich Fig. 4) direkt auf die Schwenkelemente 7"' und von diesen auf die Schwenkelemente 6"' übertragen wird. Die weitgehend als lose Teile in die Kette 3" integrierten Laschenteile 21"' sind dabei lediglich zur Festlegung der Schwenkelemente 6"' in Querrichtung vorgesehen, wobei die Glieder insgesamt mittels der Druckbolzen 14' verbunden sind. Diese Druckbolzen 14' sind mit jeweiligen Rollenlagern 26 versehen, die insbesondere im Bereich der Führungsnut 24 (Fig. 24) des Führungsteiles 13 abgestützt sind und einen entsprechenden Gegendruck bei der Umlenkung der Schwenkelemente 6"' und 7"' bewirken (ähnlich Fig. 6 und 7).

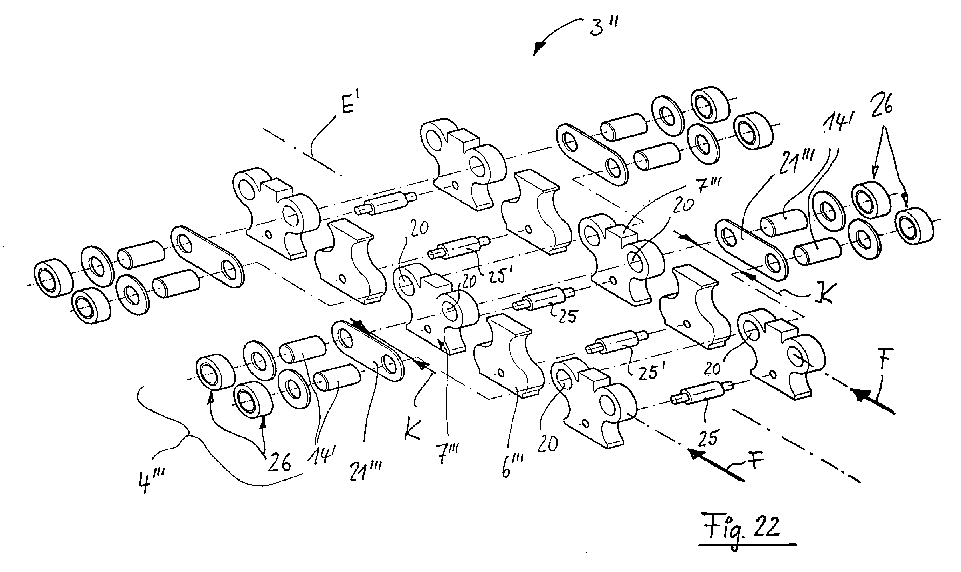

Eine weitere Gestaltung der Kette 3" ist in Fig. 22 dargestellt, wobei diese ausgehend von der eingliedrigen Grundform (in Fig. 21) durch zumindest eine nebengeordnete Bauteilreihe mehrgliedrig ausgeführt ist (ähnlich Fig. 13 bis 20). Die Schwenkelemente 6"' und 7"' entsprechen in ihrer Form den Teilen in Fig. 21, wobei bei dieser mehrgliedrigen Baureihe zumindest zwischen den paarweise der Mittellängsebene E' gegenüberliegenden zweiten Schwenkelementen 7"' ein jeweiliger Distanzstift 25 vorgesehen ist. In der dargestellten Ausführung ist einer der Distanzstifte 25' auch zwischen den jeweils gegenüberliegenden ersten Schwenkelementen 6'" vorgesehen, um deren Verschiebung zur Ebene E' hin zu vermeiden. Außenseitig sind die Schwenkelemente 6"' durch die Laschenteile 21"' übergriffen. Bei der Montage der Einzelteile wird die Kette 3" in Querrichtung dadurch verbunden, daß die Rollenlager 26 auf den Druckbolzen 14', beispielsweise durch eine entsprechende Preßverbindung o. dgl. ortsfest fixiert werden.

Die gemäß Fig. 21 und 22 verwendeten Bauteile sind als ein Bausatz konzipiert, mit dem der Herstellungsaufwand der jeweiligen Antriebskette 3" vermindert ist. Gleichzeitig wird durch weniger Bauteile auch ein geringerer Verschleiß des Systems erreicht. Eine Optimierung der Bauteilverbindung mittels der beiden Druckbolzen 14' ist dadurch erreicht, daß das Laschenteil 21"' im Bereich seiner Verbindungsbohrungen 20' einen Abstand K vorgibt, mit dem im Bereich des Antriebszahnrades 5 eine optimale Krafteinleitung möglich ist (Fig. 23, Fig. 24). Durch die paarweise Anordnung der Druckbolzen 14' wird die optimale Krafteinleitung bei der Vorschub- bzw. Rückholbewegung verbessert.

Die Druckbolzen 14' sind im Bereich der Lasche 21"' durch eine Spielpassung in die jeweilige Bohrungen 20' eingebracht und im Bereich der jeweils zugeordneten Bohrung 20 im Schwenkelement 7"' kann vorteilhaft ebenfalls eine in ihrer Toleranz an die Kettengröße angepaßte Passung, z. B. Spielpassung, vorgesehen sein. Damit liegt der Druckbolzen 14' in seiner Arbeitsstellung jeweils an der Innenwandung der Bohrung 20 zumindest bogenförmig an, so daß die Lasche 21"' keine Druck- oder Zugkräfte aufnimmt und diese jeweils nur über die Druckbolzen 14' auf die Reihung der Elemente 6"' und 7"' übertragen werden.

## Patentansprüche

1. Stellvorrichtung mit einer drucksteifen Antriebskette (3, 3', 3"), deren Laschenteile (21; 21'; 21") aufweisende und durch Gelenkteile verbundene Kettenglieder (4; 4'; 4"; 4"') mittels eines angetriebenen Kettenrades (5; 5') in eine drucksteife Stellung verlagerbar und aus dieser rückholbar sind, **dadurch gekennzeichnet, daß** deren eine regelmäßige Reihe bildende Kettenglieder (4; 4'; 4"; 4"') jeweils zwei Schwenkelemente (6, 7; 6", 7"; 6"', 7"') aufweisen, die in Kettenlängsrichtung sowohl zwischenliegend als auch zum nebengeordneten Kettenglied (4; 4'; 4"; 4"') hin jeweilige Gelenke in Form von komplementär aneinanderlegbaren Gleitflächen (G, G') mit Bogenkontur (8) bilden, an zumindest einem der beiden Schwenkelemente (6, 7; 6', 7'; 6"', 7"') je Kettenglied (4; 4'; 4"; 4"') ein Antriebsglied (9; 9'; 14, 14') vorgesehen ist und damit die Schwenkelemente mittels eines Verzahnungsprofils (10; 10') am Kettenrad (5, 5') in eine drucksteife Stellung verlagerbar und aus dieser rückholbar sind.

2. Antriebskette nach Anspruch 1, **dadurch gekennzeichnet, daß** mittels der einstückigen Schwenkelemente (6, 7; 6", 7") ein in der Antriebsphase als Stellkraft wirksames Drehmoment (A) über das jeweilige in Eingriff befindliche Antriebsglied (9) aufnehmbar ist und diese Stellkraft (F) nur im Bereich der aneinanderliegenden Gleitflächen (G, G') in die angetriebenen Schwenkelemente (6, 7) vorgelagerter Kettenglieder (4") einleitbar ist.

3. Antriebskette nach Anspruch 1, **dadurch gekennzeichnet, daß** mit den Schwenkelementen (6, 7; 6", 7"; 6"', 7"') jeweilige bei Erreichen der drucksteifen Arbeitsstellung der Kette (3; 3') wirksame Gegendruck-Kräfte (D) nur im Bereich der aneinanderliegenden Gleitflächen (G, G') aufnehmbar sind.

4. Antriebskette nach einem der Ansprüche 1 bis 3, **dadurch gekennzeichnet, daß** die Schwenkelemente (6, 7; 6", 7"; 6"', 7"') mit einem bei deren Verlagerung in die drucksteife Arbeitsstellung wirksamen Führungsteil (13) zusammenwirken.

5. Antriebskette nach einem der Ansprüche 1 bis 4, **dadurch gekennzeichnet, daß** die im Bereich der komplementären Bogenkonturen (8) relativ zueinander verschwenkbaren Schwenkelemente (6, 7; 6", 7"; 6"', 7"') eine senkrecht von den als Druckbolzen (14) ausgebildeten Antriebsgliedern (9) durchgriffene Arbeitsebene (E; E') definieren.

6. Antriebskette nach einem der Ansprüche 1 bis 5, **dadurch gekennzeichnet, daß** die Schwenkelemente (6, 7; 6", 7") in der Arbeitebene (E) aus einer gestreckten 0°-Ausgangsstellung bis in eine mehr als 180° geänderte Antriebsstellung verlagerbar sind.

7. Antriebskette nach Anspruch 6, **dadurch gekennzeichnet, daß** die Schwenkelemente (6, 7; 6", 7") von dem als Antrieb vorgesehenen Kettenrad (5; 5') derart erfaßbar sind, daß die gestreckte Kette (3; 3') auch in der Arbeitsstellung in einer tangential zum Umfang des Kettenrades (5; 5') verlaufenden Geradeausrichtung (Arbeitstrum T) verlagerbar ist.

8. Antriebskette nach Anspruch 6, **dadurch gekennzeichnet, daß** die Schwenkelemente (6, 7; 6", 7") mit einer dem Umfang des Kettenrades (3, 3') folgenden Bogenkrümmung (B) verlagerbar sind und ein abtriebseitiger Kettentrum (T) die gerade Ausrichtung aufweist.

9. Antriebskette nach einem der Ansprüche 1 bis 8, **dadurch gekennzeichnet, daß** die in der Antriebsphase im abtriebseitigen Kettnentrum (T) befindlichen Schwenkelemente (6, 7; 6", 7") zwangsgeführt in die gerade Ausrichtung (Führungsteil 13) verlagerbar sind.

10. Antriebskette nach einem der Ansprüche 1 bis 9, **dadurch gekennzeichnet, daß** die Schwenkelemente (6, 7; 6", 7") im Bereich der von den Gleitflächen (G, G') gebildeten Gelenke jeweilige endseitige Verbindungsansätze (17, 18) mit Durchgangsöffnungen (20) aufweisen, in deren Bereich jeweilige die beiden Schwenkelemente (6, 7; 6", 7") bzw. das nachfolgende Kettenglied miteinander verbindende Haltestifte (19) vorgesehen sind.

11. Antriebskette nach einem der Ansprüche 1 bis 9, **dadurch gekennzeichnet, daß** die Schwenkelemente (6, 7; 6", 7") jeweilige diese miteinander sowie mit dem nächstfolgenden Kettenglied verbindende Laschenteile (21; 21') aufweisen und diese mittels der quer zur Kettenlängsrichtung verlaufenden Haltestifte (19) jeweils eine von den Gleitflächen (G, G') unabhängige, gelenkige Verbindung bilden.

12. Antriebskette nach Anspruch 11, **dadurch gekennzeichnet, daß** das Laschenteil (21) jeweils eine den Druckbolzen (14) umfassende Aufnahmebohrung (22) aufweist und beidseits dieser jeweils ein die nebengeordneten Schwenkelemente (6, 7) bzw. Kettenglieder mittels des Haltestiftes (19) zu der Kette verbindende Stecköffnung (20') vorgesehen ist.

13. Antriebskette nach einem der Ansprüche 1 bis 12, **dadurch gekennzeichnet, daß** das die außenseitig gegenüberliegenden Laschenteile (21) jeweils mittig erfassende erste Schwenkelemente (6, 6') beidseits seiner von der Achse (23) des antreibenden Druckbolzens (14) gebildeten Querebene mit den konkav geformten Gleitflächen (G) versehen ist und an diesen jeweilig konvex geformte Gleitflächen (G') der in Kettenlängsrichtung nebengeordneten zweiten Schwenkelemente (7) geführt sind.

14. Antriebskette nach Anspruch 13, **dadurch gekennzeichnet, daß** die konvexen Gleitflächen (G') der zweiten Schwenkelemente (7) als Teilbereich einer S-förmigen Bogenkontur (8) vorgesehen sind und im obereren Teilbereich dieser S-Kontur der jeweilige das Laschenteil (21) tragende Haltestift (19) das zweite Schwenkelement (7) durchgreift.

15. Antriebskette nach Anspruch 13 oder 14, **dadurch gekennzeichnet, daß** das erste Schwenkelement (6) im Bereich seiner konkaven Bogenkontur (8) eine zum zweiten Schwenkelement (7) komplementäre S-Form aufweist.

16. Antriebskette nach einem der Ansprüche 1 bis 15, **dadurch gekennzeichnet, daß** der mit den Schwenkelementen (6, 7) zusammenwirkende Führungsteil (13) eine die äußeren Randbereiche des Druckbolzens (14) aufnehmende Führungsnut (24) aufweist.

17. Antriebskette nach einem der Ansprüche 1 bis 14, **dadurch gekennzeichnet, daß** die Kettenstruktur (3) aus mehreren im Abstand und in Kettenlängsrichtung parallel zueinander ausgerichteten Reihen von Schwenkelementen (6", 7") gebildet ist und diese parallelen Reihen durch ein verlängertes Antriebsglied (9') quer verbunden sind.

18. Antriebskette nach einem der Ansprüche 1 bis 17, **dadurch gekennzeichnet, daß** die Kettenglieder (4"') in der regelmäßigen Reihe einer eingliedrigen Kette jeweilige Paare von Laschenteilen (21"') aufweist, die das jeweilige erste Schwenkelement (6"') außenseitig übergreifen, so daß die Schwenkelemente (6"') in Kettenlängsrichtung als lose Teile nur an der jeweiligen Bogenkontur (8) der beiden nebengeordneten zweiten Schwenkelemente (7"') anlegbar sind und dabei die Stellkräfte (F; F') über die jeweiligen Laschenteile (21"') mit einer Spielpassung durchgreifende Druckbolzen (14') direkt auf die Schwenkelemente (6"', 7"') übertragbar ist.

19. Antriebskette nach einem der Ansprüche 1 bis 18, **dadurch gekennzeichnet, daß** diese (3"') aus der eingliedrigen Grundform durch zumindest eine nebengeordnete Bauteilreihe mehrgliedrig erweiterbar ist und dabei zumindest zwischen den paarweise gegenüberliegenden zweiten Schwenkelementen (7"') ein Distanzstift (25) vorgesehen ist.

20. Stellvorrichtung mit einer Antriebskette nach einem oder mehreren der Ansprüche 1 bis 19, **dadurch gekennzeichnet, daß** die Antriebskette (3; 3'; 3"; 3"') als Bauteil eines Hubtisches (2) vorgesehen ist, dessen Scheren (15, 16) mittels der durch einen Antriebsmotor (M) in drucksteife Geradeausrichtung verlagerten Antriebskette (3; 3'; 3", 3"') spreizbar sind.
